(19) Europäisches Patentamt / European Patent Office / Office européen des brevets

(11) EP 4 166 331 A1

(12) EUROPEAN PATENT APPLICATION

(43) Date of publication:
**19.04.2023 Bulletin 2023/16**

(21) Application number: **21202047.3**

(22) Date of filing: **12.10.2021**

(51) International Patent Classification (IPC):
***B33Y 10/00*** (2015.01) ***B33Y 70/00*** (2020.01)
***C08G 18/10*** (2006.01) ***C08G 18/44*** (2006.01)
***C08G 18/48*** (2006.01) ***C08G 18/72*** (2006.01)
***C08L 75/06*** (2006.01) ***C08L 75/08*** (2006.01)

(52) Cooperative Patent Classification (CPC):
(C-Sets available)
**C08G 18/10; B33Y 10/00; B33Y 70/00; C08G 18/44; C08G 18/4854; C08G 18/722; C08L 75/06; C08L 75/08** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Covestro Deutschland AG**
**51373 Leverkusen (DE)**

(72) Inventor: **The designation of the inventor has not yet been filed**

(74) Representative: **Davepon, Björn**
**Patentanwaltskanzlei Davepon**
**Schloss Dyck**
**41363 Jüchen (DE)**

(54) **PHOTO- AND THERMALLY CURABLE RESIN USEFUL IN ADDITIVE MANUFACTURING PROCESSES**

(57) A resin comprises: A) a multifunctional (meth)acrylate; B) an NCO-functional polyurethane; C) a radical starter and D) a catalyst. The multifunctional (meth)acrylate A) has a viscosity at 23 °C as determined according to DIN EN ISO 2884-1 of ≤ 10000 mPa·s, the NCO-functional polyurethane B) has an average NCO group functionality of ≥ 2 and an equivalent molecular weight with respect to NCO groups of > 300 g/mol. The resin is free from isocyanate trimerization catalysts and the resin is free from NCO-reactive compounds or, if NCO-reactive compounds are present in the resin, the molar ratio of NCO groups to NCO-reactive groups is ≥ 5:1.

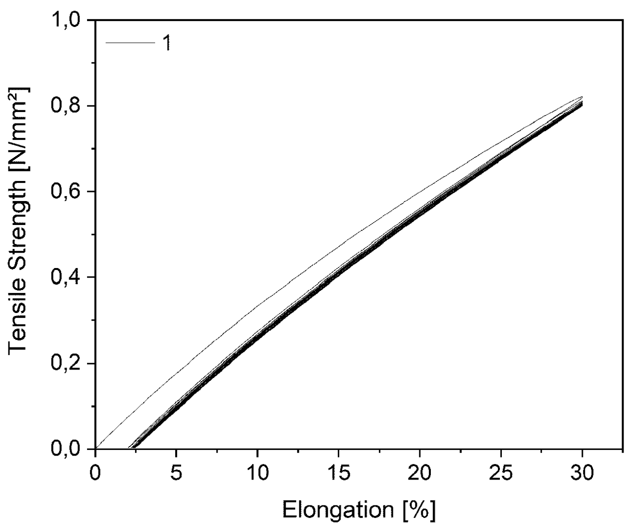


FIG. 1

EP 4 166 331 A1

(52) Cooperative Patent Classification (CPC): (Cont.)

C-Sets
**C08L 75/06, C08L 33/00;**
**C08L 75/08, C08L 33/00**

## Description

The present invention relates to a resin comprising a (meth)acrylate-functional compound, an NCO-functional polyisocyanate and a radical starter. The invention also relates to a method of curing such a resin, cured resins and articles of manufacture.

The use of additive manufacturing build materials which are solely based on acrylates usually result in brittle material properties, which is undesired when it comes to the production of functional materials. Increasing the flexibility of cured build material resins is thus highly desired.

US 2018/264719 A1 relates to a method of forming a three-dimensional object, comprising: (a) providing a carrier and a fill level, and optionally an optically transparent member having a build surface defining said fill level, said carrier and said fill level having a build region therebetween; (b) mixing a first precursor liquid and a second precursor liquid to produce a polymerizable liquid comprising a mixture of (i) a light polymerizable liquid first component, and (ii) a second solidifiable component that is different from said first component, and wherein: (i') at least one reactant of said second solidifiable component is contained in said first precursor liquid, and (ii') at least one reactant or catalyst of said second solidifiable component is contained in said second precursor liquid; then (c) filling said build region with said polymerizable liquid; (d) irradiating said build region with light (through said optically transparent member when present) to form a solid polymer scaffold from said first component and also advancing said carrier away from said build surface to form a three-dimensional intermediate having the same shape as, or a shape to be imparted to, said three-dimensional object and containing said second solidifiable component carried in said scaffold in unsolidified and/or uncured form; (e) optionally washing said three-dimensional intermediate; and (f) concurrently with or subsequent to said irradiating step, solidifying and/or curing, said second solidifiable component in said three-dimensional intermediate to form said three-dimensional object, wherein said second solidifiable component comprises a polymerizable liquid solubilized in or suspended in said first component.

US 2018/133953 A1 discloses a process for producing an object from a precursor comprises the steps of: depositing a free-radically crosslinked resin atop a carrier to obtain a ply of a construction material joined to the carrier which corresponds to a first selected cross section of the precursor; depositing a free-radically crosslinked resin atop a previously applied ply of the construction material to obtain a further ply of the construction material which corresponds to a further selected cross section of the precursor and which is joined to the previously applied ply; repeating step II) until the precursor is formed; wherein the depositing of a free-radically crosslinked resin at least in step II) is effected by exposure and/or irradiation of a selected region of a free-radically cross-linkable resin corresponding to the respectively selected cross section of the object and wherein the free-radically cross-linkable resin has a viscosity (23° C, DIN EN ISO 2884-1) of$\geq$ 5 mPa·s to $\leq$ 100000 mPa·s. In the process the free-radically cross-linkable resin comprises a curable component in which NCO groups and olefinic C=C double bonds are present, wherein in the curable component the molar ratio of NCO groups to olefinic C=C double bonds is in a range from $\geq$1:5 to $\leq$ 5:1.

WO 2018/178025 A1 relates to a process for producing an article made of a build material, wherein the build material comprises free-radically cross-linkable groups, NCO groups and groups having Zerewitinoff-active H atoms and the article is a three-dimensional article and/or a layer. During and/or after production of the article the build material is heated to a temperature of $\geq$ 50°C and the build material comprises one or more thermolatent tin compounds.

WO 2018/104223 A1 discloses a process for producing an object from a precursor, comprising the steps of: I) depositing a free-radically crosslinked resin atop a carrier to obtain a ply of a construction material joined to the carrier which corresponds to a first selected cross section of the precursor; II) depositing a free-radically crosslinked resin atop a previously applied ply of the construction material to obtain a further ply of the construction material which corresponds to a further selected cross section of the precursor and which is joined to the previously applied ply; III) repeating step II) until the precursor is formed. The depositing of a free-radically crosslinked resin at least in step II) is effected by introducing energy to a selected region of a free-radically cross-linkable resin corresponding to the respectively selected cross section of the object. The free-radically cross-linkable resin has a viscosity (23°C, DIN EN ISO 2884-1) of $\geq$ 5 mPa·s to $\leq$ 100 000 mPa·s. The free-radically cross-linkable resin comprises a curable component comprising NCO groups blocked with a blocking agent, compounds having at least two Zerewitinoff-active H atoms and olefinic C=C double bonds, wherein the blocking agent is an isocyanate or the blocking agent is selected such that deblocking of the NCO group is not followed by liberation of the blocking agent as a free molecule or as a part of other molecules or moieties. Step III) is followed by a further step IV): treating the precursor obtained after step III) under conditions sufficient for at least partially deblocking NCO groups present in the free-radically crosslinked resin of the obtained precursor and reacting the thus obtained functional groups with compounds having at least two Zerewitinoff-active H atoms to obtain the object.

US 2020/0140707 A1 relates to a method for producing an object in an additive manufacturing process from a precursor and comprises the following steps: I) depositing a layer of a radically cross-linkable construction material, which corresponds to a first selected cross-section of the precursor, on a carrier; II) depositing a layer of a radically cross-linkable construction material, which corresponds to a further selected cross-section of the precursor, on a previously applied layer of the radically cross-linked construction material; III) repeating step II) until the precursor is formed. The radically cross-linkable construction material comprises a thermoplastic radically cross-linkable polyurethane with a urethane group content of≥ 5% by weight and a photoinitiator. The radically cross-linkable construction material is also heated to a processing temperature that is greater than the melting point of the radically cross-linkable polyurethane. After step III) the precursor having a temperature of 20 °C is defined as the object, or step IV) is performed: IV) performing a chemical reaction in the precursor obtained after step III) so that the object is obtained.

The present invention has the object of providing a resin that can be used in an additive manufacturing process which after curing has elastic properties.

Accordingly a resin according to claim 1 is provided. A method of curing a resin according to claim 9, a photo-cured resin obtainable or obtained after step II) of the method is the subject of claim 14. A thermally cured resin obtainable or obtained after step III) of the method is the subject of claim 15.

The resin comprises: A) a multifunctional (meth)acrylate; B) an NCO-functional polyurethane and C) a radical starter. The multifunctional (meth)acrylate A) has a viscosity at 23 °C as determined according to DIN EN ISO 2884-1 of ≤ 10000 mPa·s. The NCO-functional polyurethane B) has an average NCO group functionality of ≥ 2 and an equivalent molecular weight with respect to NCO groups of> 300 g/mol. The resin is free from NCO-reactive compounds or, if NCO-reactive compounds are present in the resin, the molar ratio of NCO groups to NCO-reactive groups is ≥ 5:1 and the resin is free from isocyanate trimerization catalysts.

Such resins have two curing pathways: a radiation-curing of (meth)acrylate groups and, upon contact with water, a formation of urea groups from NCO groups present in the resin. Without wishing to be bound by theory it is assumed that after both curing pathways have been taken, combined networks have been formed where one network is derived from radiation-cured compound A) and the other network is derived from urea-linked NCO-functional polyurethanes B). The versatility of such combined networks lies in the synergistic behavior of the two different networks with regard to their mechanical properties.

In the radiation- and thermally cured resin according to the invention two overlapping glass transition temperatures may be observed. This may lead to only one apparent glass transition temperature being displayed in a DMA curve. However, a (meth)acrylic network in the dual polymer network can have a glass transition temperature of, for example, around 0 °C. The second glass transition temperature results from the NCO group urea network derived from NCO-functional polyurethanes and may, for example, also be around 0 °C. This transition temperature may be tuned by the choice of any polyol in the compound B) as well as the molecular weight of B).

Cured materials based on the resins according to the invention display a higher elasticity with lower residual elongation than comparable systems purely based on (meth)acrylates. These residual elongation values are understood as a proxy for the elasticity of the material. Moreover, the elongation at break as well as the tensile strengths are higher for cured materials obtained from resins according to the invention than for pure (meth)acrylate systems. The combination of increased elongation at break and low residual elongations results in an increase of the elasticity. The combination of improved properties enables the use of the materials described as energy absorber or damping materials. Furthermore, without wishing to be bound by theory, it is envisaged that in at least some embodiments of the combined networks one network takes over the function that in other materials a solid filler would. Hence the need for solid fillers is obviated, making the recycling of the combined network material more feasible. Additionally, the second network may be a thermoplastic material and hence be re-processible, further improving the recyclability of the material.

Multifunctional (meth)acrylates A) are such (meth)acrylates having, in the case of monomeric (meth)acrylates, two, three or more (meth)acrylate groups per molecule or, in the case of polymeric (meth)acrylates, an average of≥ 1.5 and preferably ≥ 2 (meth)acrylate groups per molecule. Preferred multifunctional (meth)acrylates A) are 1.4-butanediol di(meth)acrylate, 1.3-butylene glycol di(meth)acrylate, diethylene glycol di(meth)acrylate, dipropylene glycol di(meth)acrylate, di-trimethylolpropane di(meth)acrylate, 1.6-hexandiol di(meth)acrylate, neopentyl glycol di(meth)acrylate, pentaerythritol tri(meth)acrylate, polyethylene glycol di(meth)acrylate, polypropylene glycol di(meth)acrylate, tetraethylene glycol di(meth)acrylate, triethylene glycol diacrylate, trimethylolpropane tri(meth)acrylate, tripropylene glycol di(meth)acrylate, polyester diol di(meth)acrylate, polycarbonate diol di(meth)acrylate, polyethylene glycol di(meth)acrylate, polyethylene triol tri(meth)acrylate, polypropylene triol tri(meth)acrylate, polyepoxide diacrylate and a mixture of at least two of the aforementioned substances.

It is provided that the NCO-functional polyurethane B) has an average NCO group functionality of≥ 2 and an equivalent molecular weight with respect to NCO groups of > 300 g/mol. Preferably the average NCO group functionality is ≥ 2 to ≤ 4 and more preferred ≥ 2 to ≤ 3. The equivalent molecular weight with respect to NCO groups is preferably ≥ 400 g/mol to ≤ 2000 g/mol and more preferred ≥ 600 g/mol to ≤ 1000 g/mol.

For the NCO-functional polyurethanes B) the equivalent molecular weight can be determined by first titrating, for example according to DIN EN ISO 14896, a sample in order to determine the NCO content, expressed as weight-percentage based on the total weight of the polyisocyanate ("%NCO"). The equivalent molecular weight of the polyisocyanate with respect to NCO groups is calculated by dividing the product of the molecular weight of an NCO group (42 g/mol) and a factor of 100 by the %NCO value.

The NCO-functional polyurethanes B) may be obtained from the reaction of a difunctional polyol with a large excess of diisocyanate. The molar ratio of NCO groups to NCO-reactive groups may be ≥ 5:1, or even ≥ 10:1.

Suitable diisocyanates are, for example, those having a molecular weight in the range from 140 to 400 g/mol and having aliphatically, cycloaliphatically, araliphatically and/or aromatically bonded isocyanate groups, for example 1.4-diisocyanatobutane (BDI), 1.5-diisocyanatopentane (PDI), 1.6-diisocyanatohexane (HDI), 2-methyl-1.5-diisocyanatopentane, 1.5-diisocyanato-2.2-dimethylpentane, 2.2,4- or 2.4,4-trimethyl-1.6-diisocyanatohexane, 1.10-diisocyanatodecane, 1.3- and 1.4-diisocyanatocyclohexane, 1.4-diisocyanato-3.3,5-trimethylcyclohexane, 1.3-diisocyanato-2-methylcyclohexane, 1.3-diisocyanato-4-methylcyclohexane, 1-isocyanato-3.3,5-trimethyl-5-isocyanatomethylcyclohexane (isophorone diisocyanate; IPDI), 1-isocyanato-1-methyl-4(3)-isocyanatomethylcyclohexane, 2.4'- and 4.4'-diisocyanatodicyclohexylmethane (H12MDI), 1.3- and 1.4-bis(isocyanatomethyl)cyclohexane, bis(isocyanatomethyl)norbornane (NBDI), 4 .4'-diisocyanato-3.3 '-dimethyldicyclohexylmethane, 4 .4'-diisocyanato-3.3 ',5 .5'-tetramethyldicyclohexylmethane, 4.4'-diisocyanato-1.1'-bi(cyclohexyl), 4.4'-diisocyanato-3.3'-dimethyl-1.1'-bi(cyclohexyl), 4.4'-diisocyanato-2.2',5.5'-tetramethyl-1.1'-bi(cyclohexyl), 1.8-diisocyanato-p-menthane, 1.3-diisocyanatoadamantane, 1.3-dimethyl-5.7-diisocyanatoadamantane, 1.3- and 1.4-bis(isocyanatomethyl)benzene (xylylene diisocyanate; XDI), 1.3- and 1.4-bis(1-isocyanato-1-methylethyl)benzene (TMXDI) and bis(4-(1-isocyanato-1-methylethyl)phenyl) carbonate, 2.4- and 2.6-diisocyanatotoluene (TDI), 2.4'-and 4.4'-diisocyanatodiphenylmethane (MDI), 1.5-diisocyanatonaphthalene and any desired mixtures of such diisocyanates. Preferred are the non-aromatic diisocyanates, in particular PDI, IPDI, H12MDI and HDI.

Suitable polyols are preferably linear polyether polyols, polyester polyols, polyacrylate polyols, polyepoxide polyols or polycarbonate polyols. The molecular weight of the polyol can be 500 g/mol to 4000 g/mol, preferably 900 g/mol to 2500 g/mol.

The radical starter C) can be a thermal initiator and/or a photoinitiator. Examples for thermal initiators C) include azobisisobutyronitrile (AIBN), dibenzoyl peroxide (BPO), tert.-butyl hydroperoxide (TBHP), di-tert.-butyl peroxide (DTBP), cumyl peroxyneodecanoate, 2.2'-azobis(4-methoxy-2.4-dimethylvaleronitrile (V-70) and their mixtures.

Photoinitiators C) can be Norrish type I (cleavage), Norrish type II (abstraction) or cationic photoinitiators. Specific examples are Irgacur®500 (a mixture of benzophenone and (1-hydroxycyclohexyl)phenylketone), Irgacure®819 DW (phenylbis-(2, 4, 6-trimethylbenzoyl)phosphine oxide), Esacure® KIP EM (oligo-[2-hydroxy-2-methyl-1-[4-(1-methylvinyl)-phenyl]-propanones]) and Ivocerin® (bis(4-methoxybenzoyl)diethylgermanium). A preferred photoinitiator is 2-hydroxy-2-methylpropiophenone, commercially available as Omnirad® 1173. Another preferred photoinitiator system is a mixture commercially available as Omnirad® BL 750. Mixtures of the aforementioned photoinitiator compounds or systems may also be employed.

In the resin according to the invention the radical starter is generally employed in a concentration, based on the amount of employed curable component, of 0.01 to 6.0 weight-%, preferably of 0.1 to 4.0 weight-% and particularly preferably of 0.5 to 3.0 weight-%.

Preferably a photoinitiator C) is selected from: $\alpha$-hydroxyphenylketones, benzildimethylketal, 2,4,6-trimethylbenzoyldiphenyl-phosphine oxide and/or bis(4-methoxybenzoyl)diethylgermanium and the catalyst D) is selected from: potassium acetate, potassium acetate in combination with a crown ether, potassium acetate in combination with a polyethylene glycol, potassium acetate in combination with a polypropylene glycol, tin ethylhexanoate, sodium phenoxide, potassium hydroxide, trioctyl phosphine and/or tributyltin oxide.

It is further provided that the resin is free from NCO-reactive compounds or, if NCO-reactive compounds are present in the resin, the molar ratio of NCO groups to NCO-reactive groups is ≥ 5:1. Such NCO-reactive compounds to be avoided include monoalcohols, polyols, monoamines and polyamines. "Free from" is to be understood as meaning that technically unavoidable traces are included, but no deliberate addition of such NCO-reactive compounds has taken place. If, for some reason, NCO-reactive compounds have to be present in the resin then the molar ratio of NCO groups to NCO reactive groups is preferably ≥ 10:1, more preferred ≥ 20:1 and most preferred ≥ 100:1.

Isocyanate trimerization catalysts from which the resin is free from are, in principle, all compounds which, as their main reaction in terms of molar product distribution based on the amount of NCO groups in the starting material, accelerate the addition of isocyanate groups to afford isocyanurate groups and thus crosslink the isocyanate-containing molecules present. Specific examples are potassium acetate, potassium acetate in combination with a crown ether, potassium acetate in combination with a polyethylene glycol, potassium acetate in combination with a polypropylene glycol, tin ethylhexanoate, sodium phenoxide, potassium hydroxide, trioctyl phosphine and/or tributyltin oxide. "Free from" is again to be understood as that technically unavoidable traces are included, but no deliberate addition of such catalysts has taken place. For example the amount of any isocyanate trimerization catalyst present in the resin can be below 0.0005 weight-%, below 0.0001 weight-% or below 0.00001 weight-%, based on the total weight of the resin.

In one embodiment the resin further comprises a monomeric mono(meth)acrylate. This serves as a reactive thinner. Preferred are isobornyl methacrylate (IBOMA), tetrahydrofuryl acrylate (THFA), isobutyl(meth)acrylate, n-butyl(meth)acrylate, isopropyl(meth)acrylate, n-propyl(meth)acrylate, ethyl(meth)acrylate, 2 ethyl-hexyl methacrylate or a mixture of at least two of the aforementioned substances.

In another embodiment the resin further comprises a second polyisocyanate with an average NCO group functionality of ≥ 2 and an equivalent molecular weight with respect to NCO groups of < 300 g/mol. Examples are allophanates, biurets, uretdiones, isocyanurates, iminooxadiazinediones or a mixture of at least two of the aforementioned polyisocyanates. A particularly preferred second polyisocyanate is an allophanate having the following structure where o and p are, independently of each other, 4, 5,6, 10 or 13 and where R is an alkyl rest having 1 to 12 carbon atoms:

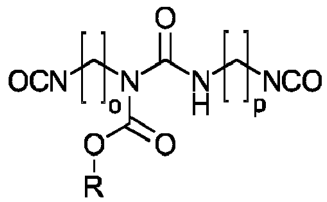

In another embodiment the multifunctional (meth)acrylate A) has a viscosity at 23 °C as determined according to DIN EN ISO 2884-1, of ≥ 1 mPa·s to ≤ 1000 mPa·s. Preferred viscosities are ≥ 5 mPa·s to ≤ 500 mPa·s.

In another embodiment the radical starter C) is present in an amount of ≤ 3 weight-%, based on the total weight of the acrylic phase.

In another embodiment the multifunctional (meth)acrylate A) and the NCO-functional polyurethane B) are present in a weight ratio between 2:1 and 1:3, based on the total weight of A) and B).

In another embodiment the resin further comprises a water urea reaction catalyst. These catalysts facilitate the reaction between two NCO groups and water to form urea groups, thus linking NCO-terminated polymer chains to each other. Examples for water urea reaction catalysts are bis-(2-(N,N-dimethylamino)ethyl) ether, 2,2'-dimorpholinyldiethyl ether, N,N,N-trimethyl-N-hydroxyethyl-bisaminoethyl ether, 3-dimethylamino-N,N-dimethylpropione amide, 1,8-diazabicyclo[5.4.0]undec-7-ene (DBU), 1,5-diazabicyclo[4.3.0]non-5-ene, 1,1,3,3-tetramethylguanidine, N-ethylmorpholine, 4,4'-(oxydi-2,1-ethandiyl)dimorpholine or a mixture of at least two of the aforementioned catalysts. Particularly preferred are DBU and tetramethylguanidine. In the resin according to the invention the water urea reaction catalyst is preferably present in an amount of ≥ 0.1 to ≤ 2.0 weight-%, based on the total weight of the resin.

Alternatively the resin may be free from water urea reaction catalysts. "Free from" is again to be understood as that technically unavoidable traces are included, but no deliberate addition of such catalysts has taken place. For example the amount of any water urea reaction catalyst present in the resin can be below 0.0005 weight-%, below 0.0001 weight-% or below 0.00001 weight-%, based on the total weight of the resin. This alternative provides for a simplified formulation of the resin in instances where simply contacting the partially cured material with water is sufficient for the satisfactory formation of urea groups or the catalyst is provided with the water, dissolved or dispersed in the water.

In another embodiment the resin further comprises a pH indicator dye. The color change in such dyes that occurs during curing with water contact can serve as an indicator of the progress of the curing. Examples for suitable dyes are fluorescein, dibromofluorescein, diiodofluorescein, tetrabromofluorescein, tetraiodofluorescein, tetrabromotetrachlorofluorescein and combinations thereof. In the resin according to the invention the dye is preferably present in an amount of ≥ 0.01 to ≤ 2.0 weight-%, based on the total weight of the resin.

Another aspect of the invention is a method of curing a resin, comprising: I) providing a resin; II) generating radicals from radical starters present in the resin, thereby obtaining a radically cured resin and III) treating the radically cured resin of step II), thereby obtaining a post-cured resin. In step I) the resin is a resin according to the invention. In step II) the radicals initiate a reaction between (meth)acrylate groups in the resin. In step III) the treating of the radically cured resin is performed by contacting the radically cured resin with water, thereby initiating a formation of urea groups from isocyanate groups in the resin. Details regarding the resin according to the invention have already been given in the preceding sections of the specification and will not be repeated here in the interest of brevity.

The method according to the invention reflects the dual-cure approach where irradiation of the resin, thermally or by radiation (for example with infrared, visible or ultraviolet light), solidifies the liquid or plastic starting material under formation of a (meth)acrylate polymer network and water curing builds the urea network which results in combined networks. Temperatures in step III) are preferably ≥ 1 °C to 150 °C, more preferred ≥ 50 °C to ≤ 150 °C and even more preferred ≥ 90 °C to ≤ 110 °C. If a thermally induced radical curing of the resin is desired in step II), the temperatures in step II) are preferably ≥ 50 °C to ≤ 200 °C and more preferred ≥ 90 °C to ≤ 150 °C.

In one embodiment in step I) the resin is provided as a coating on a substrate. The water contacting step can then serve to harden shadow areas that have not been sufficiently irradiated with light.

In another embodiment in step II) the resin is selectively irradiated according to a pre-determined cross-section of a target article to be manufactured and the selective irradiation is repeated until a pre-determined intermediate article comprising the photo-cured resin is obtained. This embodiment encompasses additive manufacturing processes such as stereolithography (SLA) and DLP. As the water contacting step III) can take place outside of the SLA or DLP system

the space-time-yield of finished products with respect to available number of SLA or DLP machines can be increased.

In another embodiment prior to step II) the resin is selectively applied onto a surface according to a pre-determined cross-section of a target article to be manufactured and selective heating and/or irradiation according to step II) is repeated until a pre-determined intermediate article comprising the radically cured resin is obtained.

The surface can be a powder surface. Then the method according to this embodiment resembles a binder jetting process. Alternatively, the process can be a so-called photopolymer jetting process. As the application of the resin is selective, the heating and/or irradiation in step II) does not need to be selective. The heating and/or irradiation or heating of the entire build platform would then be sufficient.

In another embodiment step III) is performed at a temperature of ≥ 50 °C to ≤ 120 °C for a time of≥ 1 hours to ≤ 24 hours.

The invention is furthermore directed towards a photo-cured resin obtainable or obtained after step II) of a method according to the invention and towards a water-cured resin obtainable or obtained after step III) of a method according to the invention. The water-cured resin may, for example have a tensile strength at break, determined according to DIN EN ISO 527, of ≥ 0.7 $N/mm^2$ to ≤ 60 $N/mm^2$ and preferably ≥ 0.8 $N/mm^2$ to 30 $N/mm^2$. The elongation at break, determined according to DIN EN ISO 527, may be ≥ 20% to ≤ 150% and preferably ≥ 55 to ≤ 100%. The residual elongation, determined according to DIN EN ISO 527, may be ≥ 0.1% to ≤ 5% and preferably ≥ 1 to ≤ 4.8%.

A further aspect of the invention is an article of manufacture comprising a photo-cured resin according to the invention and/or a thermally cured resin according to the invention. Examples for such articles include medical devices, personalized medical articles, replicated medical implants, dental articles, sterilization containers and footwear components.

## Examples

The present invention will be further described with reference to the following examples and figures without wishing to be limited by them. Comparative examples are designated as "(Comp.)"

## Materials

Hexamethylene diisocyanate (HDI, NCO-content: 50%) and isophorone diisocyanate (IPDI, NCO-content: 37.62%), as well as the polyethercarbonate polyol (Polyol-1) were sourced form Covestro Deutschland AG.

The isocyanate Allo-1 was a low viscosity allophanate based on HDI with an isocyanate content of approx. 20.0 % according to ISO 11909, a viscosity at 23 °C of approx. 500 mPa·s according to ISO 3219/A.3 and an isocyanate group functionality of approximately 2.5. The equivalent weight with respect to NCO groups was 210 g/mol.

Allo-1 was sourced from Covestro Deutschland AG and was used as received. Polytetrahydrofurane (Polyol-2) was purchased from BASF. The photoinitiator Omnirad BL750 was sourced from IGM Resins. The inhibitor 2,5-bis(5-tert-butyl-2-benzoxazolyl)thiophene was purchased from sigma Aldrich and was used as received. The (meth)acrylates mentioned below (THFA, PEGDA 700 g/mol) were purchased from sigma Aldrich and were used as received. The dye 2',4',5',7'-tetrabromo-3,4,5,6-tetrachlorofluorescein was purchased from sigma Aldrich and was used as received.

The polyols used were:

| Polyol | Description |
|---|---|
| Polyol-1 | Linear polyethercarbonate diol, Mn = 1000 g/mol |
| Polyol-2 | Linear difunctional polytetrahydrofurane, Mn = 1000 g/mol |

The acrylates used were:

| Acrylate | Functionality | Viscosity [mPa·s] |
|---|---|---|
| Tetrahydrofurylacrylate (THFA) | 1 | 8 |
| Polyethyleneglycol diacrylate 700 g/mol (PEGDA700) | 2 | 110 |

## Methods

FTIR-spectra were measured on a Bruker FTIR Spectrometer Tensor II equipped with an ATR crystal.

Tensile tests were measured on a Zwick Retro with a 2 kN load cell, according to DIN EN ISO 527 at a test

speed of 200 mm/min and a preload of 0.5 N. The E-modulus was determined between 0.05% and 0.025% elongation with a test speed of 1 mm/min.

Prints were performed on an ANYCUBIC PhotonS with a UV-LED light source of 405 nm. STL files were created using ANYCUBI Photon slicer. The layer thickness was 100 μm and the printing parameters were chosen according to the respective formulation (see table 5).

The NCO content was determined by titration. About 2.0 g of sample without isocyanate groups (blank sample) were added to 5.0 mL of a 0.1 M dibutyl amine solution in xylene followed by the addition of 50.0 mL of acetone and 3 drops of a phenol red solution (0.1 g in 80 g of a 20% ethanol in water mixture). This solution was then titrated with a 0.1 M hydrochloric acid solution to the color change and the consumption was recorded. NCO group-containing samples were treated accordingly. The NCO content "%NCO" was calculated according to:

$$\%NCO = 4.2 * M * \frac{V_{blank} - V_{sample}}{m}$$

with M being the molarity of hydrochloric acid (e.g. 0.1 mol/L), m being the sample weight (g), $V_{blank}$ being the consumption of hydrochloric acid in the blank sample in mL and $V_{sample}$ being the consumption of hydrochloric acid in the sample in mL.

The NCO-terminated polyurethanes were prepared according to literature with slight modifications (Driest, P. J.; Dijkstra, D. J.; Stamatialis, D.; Grijpma, D. W., The Trimerization of Isocyanate-Functionalized Prepolymers: An Effective Method for Synthesizing Well-Defined Polymer Networks. Macromolecular Rapid Communications 2019, 40 (9), 1800867).

Generally, HDI or IPDI were heated to 100 °C under nitrogen atmosphere in a three-necked flask equipped with a stirrer, a condenser and a thermometer. 100 g of polymeric diol, buffered with 0.1 g dibutyl phosphate, were added dropwise to the HDI /IPDI in a molar ratio of 10:1 / 10:1 (NCO:OH). The reaction was allowed to take place for 3 h or until the desired isocyanate content was obtained, determined by titration. Subsequently, the product was transferred to a thin-film evaporator to remove excess HDI or IPDI at 140 °C or 150 °C, respectively, and reduced pressure (typically $10^{-2}$ mbar).

The NCO-functional polyurethanes were obtained as clear and viscous resins. The following table gives data of the NCO-terminated polyurethanes ("ISO") synthesized and their corresponding viscosities measured according to DIN EN ISO 2884-1.

| # | **ISO-1** | **ISO-2** |
|---|---|---|
| Isocyanate | HDI | IPDI |
| Polyol | Polyol-1 | Polyol-2 |
| Viscosity (23 °C) [mPa·s] | 5080 | 14600 |
| NCO-content [%] | 6.1 | 5.4 |
| EW* [g/mol] | 685 | 778 |
| Average NCO group functionality | 2 | 2 |
| *: equivalent molecular weight with respect to NCO groups | | |

Results of curing of inventive formulations: cured products based on acrylic and isocyanate-terminal precursors were prepared by mixing the NCO-terminated precursors with the low-viscosity (meth)acrylates, the photoinitiator (Omnirad BL 750), the inhibitor and the pH indicator dye. All resin formulations were prepared by mixing the substances for five minutes, using a speedmixer. Subsequently, the resin formulation was printed on an ANYCUBIC PhotonS with a UV-LED light source of 405 nm. STL files were created using ANYCUBIC Photon slicer. The 3D printed objects were tensile test specimens. The layer thickness was 100 μm and the printing parameters were chosen according to the respective formulation. For the second curing reaction, the 3D printed objects were placed into water and either remained at room temperature for at least 2 days or at 100 °C for 24 h. In case that the material was cured in water at 100 °C, water was refilled from time to time. The presence or absence of isocyanate groups was determined by IR-spectroscopy (2265 $cm^{-1}$). Comparative formulation 5 was prepared by mixing the corresponding (meth)acrylates and the photoinitiator using a speedmixer. Subsequently the formulation was cast as a film on a glass substrate, followed by a UV curing process.

Tables 1a and 1b show the results of inventive, doubly-cured formulations 1-4.

Table 2 shows the results of singly-cured comparative formulation 5.

In all tables, "RT" stands for room temperature. If not stated otherwise, residual elongation values represent

the measured values after 10 cycles with a stress point at 30 % elongation. Samples with an '*' were measured with a stress point at 20 % elongation.

Table 1a:

| # | **1** | **2** |
|---|---|---|
| ISO-1 [g] | 75 | 75 |
| Allo-1 [g] | 25 | 25 |
| THFA [g] | 60 | 60 |
| PEGDA 700 [g] | 40 | 40 |
| Omnirad BL 750 [g] | 0.5 | 0.5 |
| 2,5-bis(5-tert-butyl-2-benzoxazolyl)thiophene [g] | 0.1 | 0.1 |
| 2',4',5',7'-tetrabromo-3,4,5,6-tetrachlorofluorescein [g] | 0.1 | 0.1 |
| T [°C] (Condition 2nd curing reaction) | 100 | RT |
| Tensile Strength at break [N/mm$^2$] | 1.3 | 0.85 |
| Elongation at break [%] | 56 | 78 |
| Residual elongation [%] | 2.6 | 2.2* |

Table 1b:

| # | **3** | **4** |
|---|---|---|
| ISO-2 [g] | 75 | 75 |
| Allo-1 [g] | 25 | 25 |
| THFA [g] | 60 | 60 |
| PEGDA 700 [g] | 40 | 40 |
| Omnirad BL 750 [g] | 0.5 | 0.5 |
| 2,5-bis(5-tert-butyl-2-benzoxazolyl)thiophene [g] | 0.1 | 0.1 |
| 2',4',5',7'-tetrabromo-3,4,5,6-tetrachlorofluorescein [g] | 0.1 | 0.1 |
| T [°C] (Condition 2nd curing reaction) | 100 | RT |
| Tensile Strength at break / N/mm$^2$] | 2.7 | 2.1 |
| Elongation at break [%] | 71 | 86 |
| Residual elongation [%] | 4.7 | 2.3 |

Table 2:

| # | **5 (Comparative)** |
|---|---|
| THFA [g] | 60 |
| PEGDA 700 [g] | 40 |
| Omnirad BL 750 [g] | 0.5 |
| 2,5-bis(5-tert-butyl-2-benzoxazolyl)thiophene [g] | 0.1 |
| 2',4',5',7'-tetrabromo-3,4,5,6-tetrachlorofluorescein [g] | 0.1 |
| T [°C] (Condition 2nd curing reaction) | - |
| Tensile Strength at break / N/mm$^2$] | 0.63 |

(continued)

| # | 5 (Comparative) |
|---|---|
| Elongation at break [%] | 9.4 |
| Residual elongation [%] | residual elongation not measurable |

FIG. 1 to FIG. 4 show the residual elongation measurements of samples 1 to 4, respectively, in tensile strength tests. All samples show elastomeric-like material properties with only little residual elongation.

FIG. 5 shows the tensile strength test result of the comparative sample 5 in order to illustrate that the measurement of residual elongation is not possible as the material breaks already at about 10 % elongation. It further reveals that the material is not elastic but simply soft.

FIG. 6 shows a time dependent FT-IT spectrum of sample 3, as well as images of the specimen at the respective time of measurement during the second curing reaction. As can be seen, IR spectra were recorded and visual observations were conducted at 1 h, 3 h, 5 h and 24 h after starting the contacting with water. The decrease of the stretching vibration of the isocyanate signal at 2265 $cm^{-1}$ goes in hand with a change in color of the sample (from a translucent pink to a vibrant red), indicating the degree of cure of the water curing reaction.

## Claims

1. A resin comprising:

    A) a multifunctional (meth)acrylate
    B) an NCO-functional polyurethane and
    C) a radical starter,

    **characterized in that**

    the multifunctional (meth)acrylate A) has a viscosity at 23 °C as determined according to DIN EN ISO 2884-1 of≤ 10000 mPa·s.
    the NCO-functional polyurethane B) has an average NCO group functionality of≥ 2 and an equivalent molecular weight with respect to NCO groups of> 300 g/mol,
    the resin is free from NCO-reactive compounds or, if NCO-reactive compounds are present in the resin, the molar ratio of NCO groups to NCO-reactive groups is ≥ 5:1 and
    that the resin is free from isocyanate trimerization catalysts.

2. The resin according to claim 1, further comprising a monomeric mono(meth)acrylate.

3. The resin according to claim 1 or 2, further comprising a second polyisocyanate with an average NCO group functionality of≥ 2 and an equivalent molecular weight with respect to NCO groups of < 300 g/mol.

4. The resin according to any one claims 1 to 3, wherein the multifunctional (meth)acrylate A) has a viscosity at 23 °C as determined according to DIN EN ISO 2884-1, of≥ 1 mPa·s to ≤ 1000 mPa·s.

5. The resin according to any one of claims 1 to 4, wherein the radical starter C) is present in an amount of≤ 3 weight-%, based on the total weight of the acrylic phase.

6. The resin according to any one of claims 1 to 5, wherein the multifunctional (meth)acrylate A) and the NCO-functional polyurethane B) are present in a weight ratio between 2:1 and 1:3, based on the total weight of A) and B).

7. The resin according to any one of claims 1 to 6, further comprising a water urea reaction catalyst.

8. The resin according to any one of claims 1 to 7, further comprising a pH indicator dye.

9. A method of curing a resin, comprising:

I) providing a resin;
II) generating radicals from radical starters present in the resin, thereby obtaining a radically cured resin and
III) treating the radically cured resin of step II), thereby obtaining a post-cured resin;

**characterized in that**

in step I) the resin is a resin according to any one of claims 1 to 8;
in step II) the radicals initiate a reaction between (meth)acrylate groups in the resin;
in step III) the treating of the radically cured resin is performed by contacting the radically cured resin with water, thereby initiating a formation of urea groups from isocyanate groups in the resin.

**10.** The method according to claim 9, wherein in step I) the resin is provided as a coating on a substrate.

**11.** The method according to claim 9, wherein:
in step II) the resin is selectively irradiated according to a pre-determined cross-section of a target article to be manufactured and the selective irradiation is repeated until a pre-determined intermediate article comprising the photo-cured resin is obtained.

**12.** The method according to claim 9, wherein:
prior to step II) the resin is selectively applied onto a surface according to a pre-determined cross-section of a target article to be manufactured and selective heating and/or irradiation according to step II) is repeated until a pre-determined intermediate article comprising the radically cured resin is obtained.

**13.** The method according to any one of claims 9 to 12, wherein step III) is performed at a temperature of ≥ 50 °C to ≤ 120 °C for a time of ≥ 1 hours to ≤ 24 hours.

**14.** A photo-cured resin obtainable or obtained after step II) of a method according to any one of the claims 9 to 13.

**15.** A water-cured resin obtainable or obtained after step III) of a method according to any one of the claims 9 to 13.

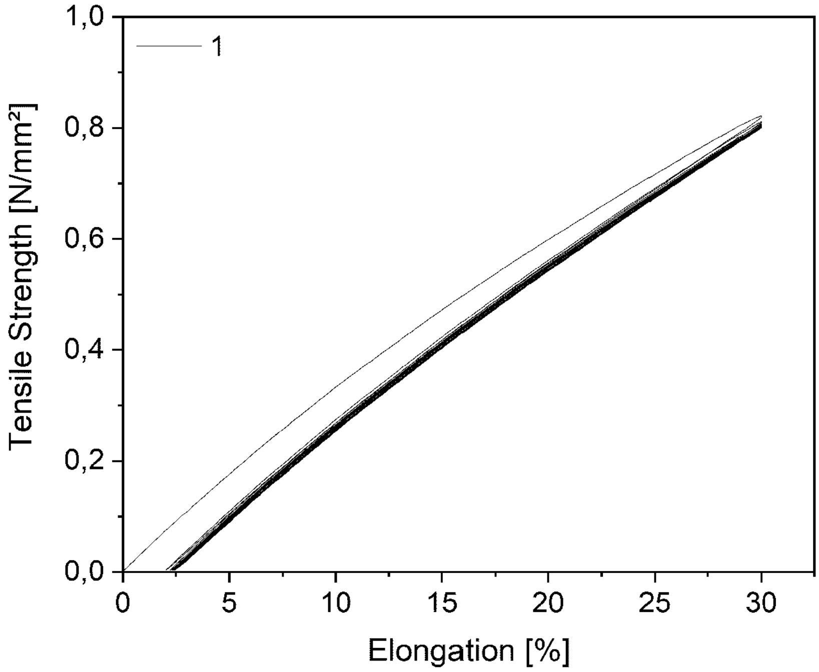
1,0
0,8
0,6
0,4
0,2
0,0
Tensile Strength [N/mm²]
1
0
5
10
15
20
25
30
Elongation [%]

FIG. 1

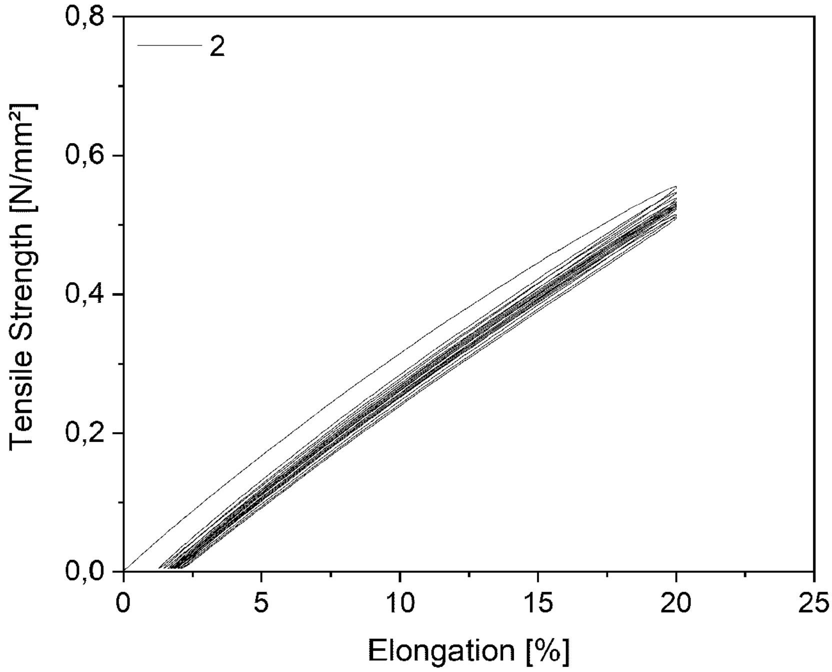
0,8
0,6
0,4
0,2
0,0
Tensile Strength [N/mm²]
2
0
5
10
15
20
25
Elongation [%]

FIG. 2

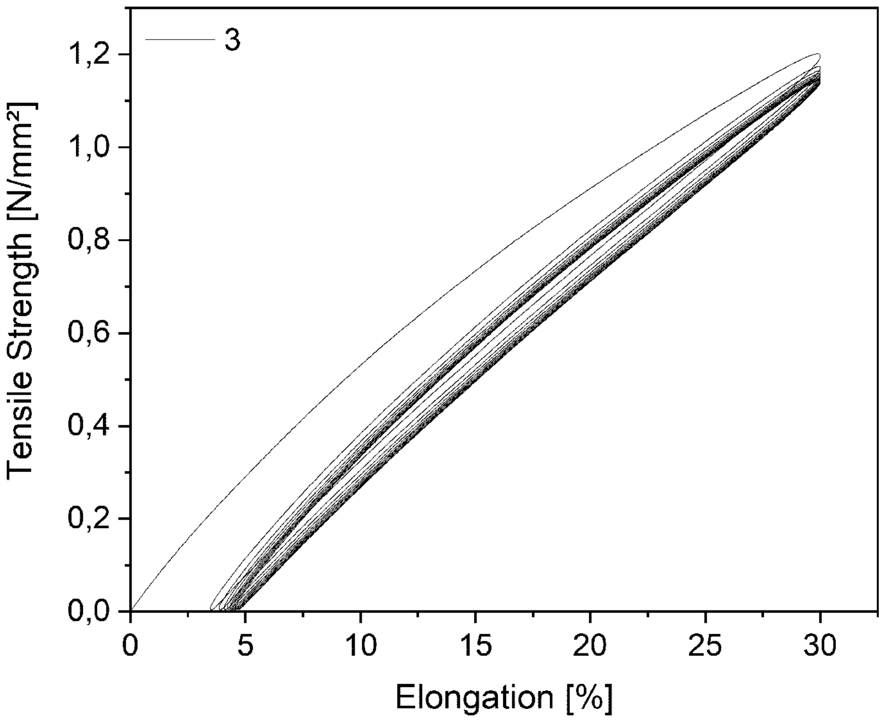
3
Tensile Strength [N/mm²]
0,0
0,2
0,4
0,6
0,8
1,0
1,2
0
5
10
15
20
25
30
Elongation [%]

FIG. 3

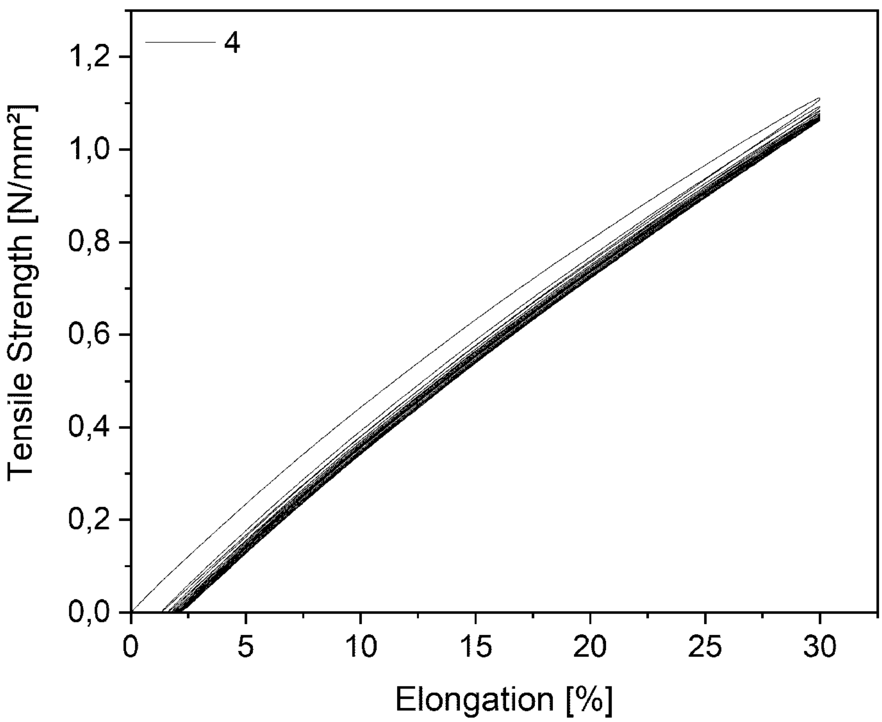
4
Tensile Strength [N/mm²]
0,0
0,2
0,4
0,6
0,8
1,0
1,2
0
5
10
15
20
25
30
Elongation [%]

FIG. 4

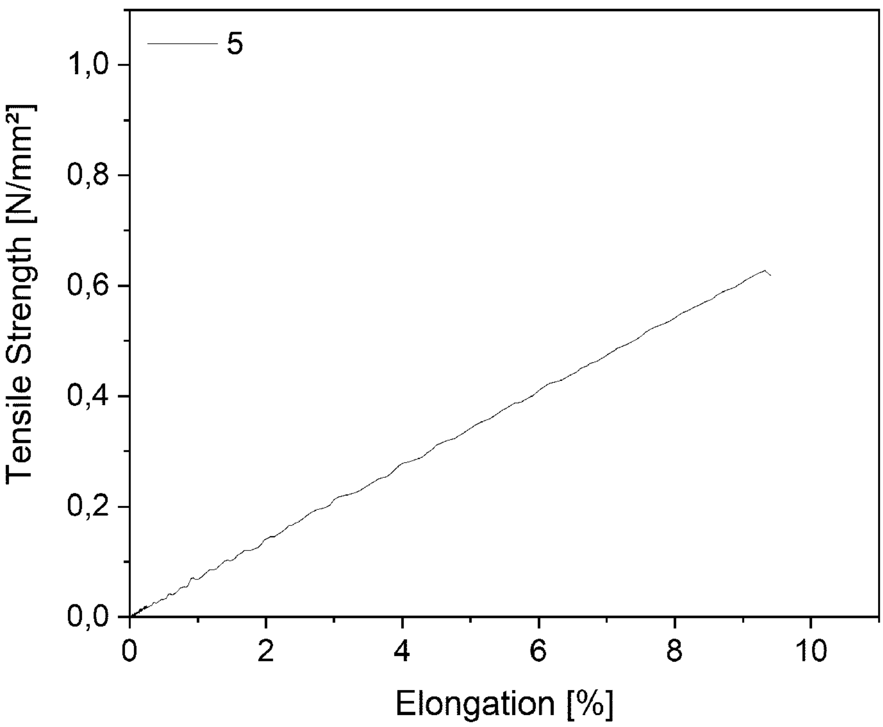


FIG. 5

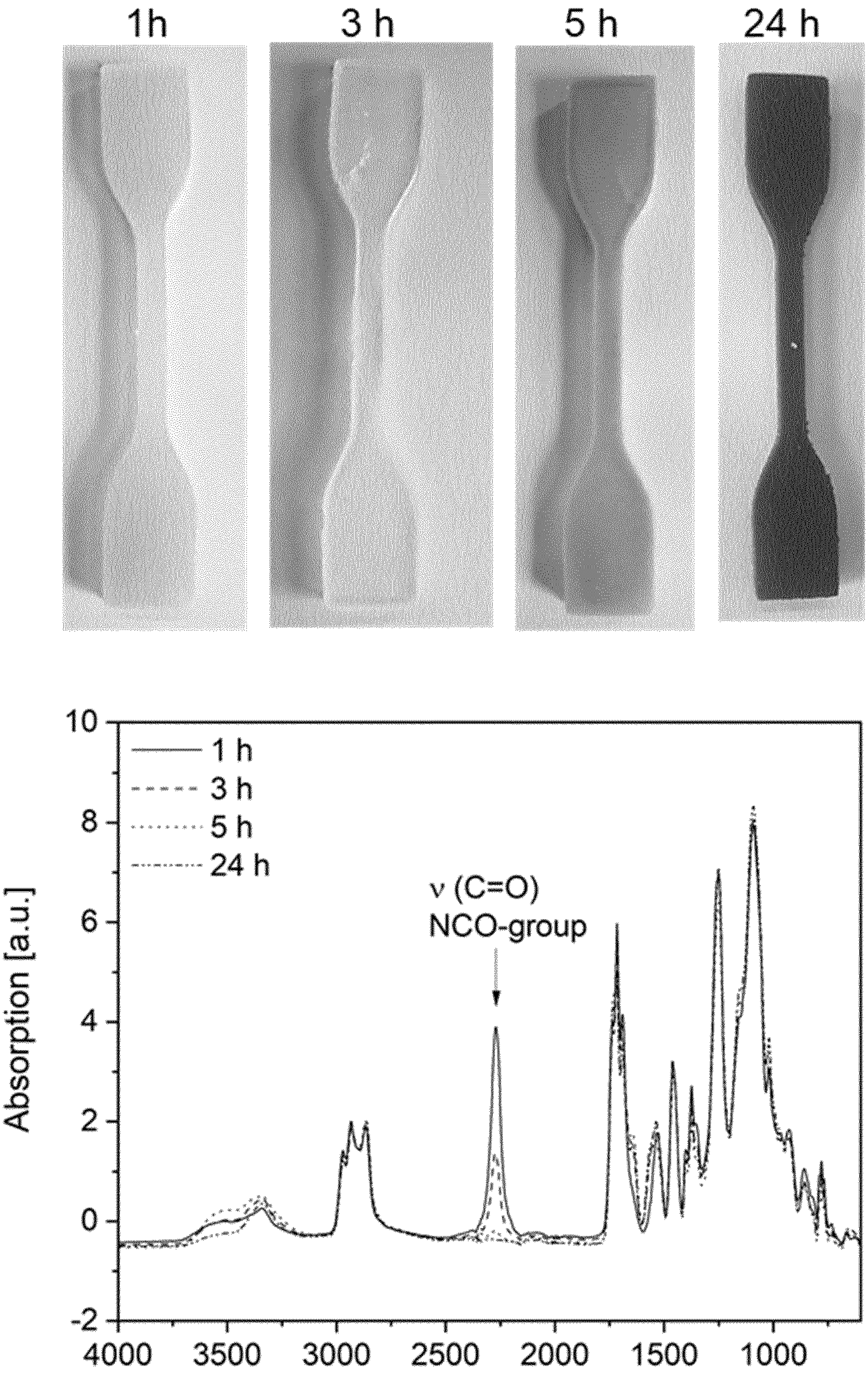
1h
3 h
5 h
24 h
1 h
3 h
5 h
24 h
ν (C=O)
NCO-group
Absorption [a.u.]
Wavenumber [cm-1]
10
8
6
4
2
0
-2
4000
3500
3000
2500
2000
1500
1000

FIG. 6

Europäisches Patentamt
European Patent Office
Office européen des brevets

# EUROPEAN SEARCH REPORT

Application Number
EP 21 20 2047

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/337224 A1 (ACHTEN DIRK [DE] ET AL) 7 November 2019 (2019-11-07) * paragraphs [0067], [0019], [0078]; claim 14; table 1 * ----- | 1-15 | INV. B33Y10/00 B33Y70/00 C08G18/10 C08G18/44 C08G18/48 C08G18/72 C08L75/06 C08L75/08 |
| X | US 10 350 823 B2 (CARBON INC [US]) 16 July 2019 (2019-07-16) * claims 1-12; table 26 * ----- | 1-15 | |
| X<br>A | US 2021/087324 A1 (ACHTEN DIRK [DE] ET AL) 25 March 2021 (2021-03-25) * claims 1-30; table 1 * ----- | 1-8<br>9-15 | |

TECHNICAL FIELDS SEARCHED (IPC)

B33Y
C08G
C08L

The present search report has been drawn up for all claims

2

| Place of search | Date of completion of the search | Examiner |
|---|---|---|
| Munich | 6 April 2022 | Buestrich, Ralf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 21 20 2047

This annex lists the patent family members relating to the patent documents cited in the above-mentioned European search report. The members are as contained in the European Patent Office EDP file on
The European Patent Office is in no way liable for these particulars which are merely given for the purpose of information.

06-04-2022

| Patent document cited in search report | Publication date | Patent family member(s) | Publication date |
|---|---|---|---|
| US 2019337224 A1 | 07-11-2019 | CN 109923142 A | 21-06-2019 |
| | | CN 109923143 A | 21-06-2019 |
| | | CN 109963890 A | 02-07-2019 |
| | | CN 110023368 A | 16-07-2019 |
| | | EP 3538583 A1 | 18-09-2019 |
| | | EP 3538584 A1 | 18-09-2019 |
| | | EP 3538585 A1 | 18-09-2019 |
| | | EP 3538586 A1 | 18-09-2019 |
| | | JP 2019535554 A | 12-12-2019 |
| | | KR 20190086447 A | 22-07-2019 |
| | | US 2018133953 A1 | 17-05-2018 |
| | | US 2019337224 A1 | 07-11-2019 |
| | | US 2019367665 A1 | 05-12-2019 |
| | | US 2019367666 A1 | 05-12-2019 |
| | | US 2020190245 A1 | 18-06-2020 |
| | | WO 2018087382 A1 | 17-05-2018 |
| | | WO 2018087395 A1 | 17-05-2018 |
| | | WO 2018087396 A1 | 17-05-2018 |
| | | WO 2018087399 A1 | 17-05-2018 |
| US 10350823 B2 | 16-07-2019 | CN 108139665 A | 08-06-2018 |
| | | EP 3341792 A1 | 04-07-2018 |
| | | JP 2019503885 A | 14-02-2019 |
| | | US 2018264719 A1 | 20-09-2018 |
| | | US 2019283316 A1 | 19-09-2019 |
| | | WO 2017112653 A1 | 29-06-2017 |
| US 2021087324 A1 | 25-03-2021 | CN 110461898 A | 15-11-2019 |
| | | EP 3381959 A1 | 03-10-2018 |
| | | EP 3601398 A1 | 05-02-2020 |
| | | US 2021087324 A1 | 25-03-2021 |
| | | WO 2018178025 A1 | 04-10-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2018264719 A1
- US 2018133953 A1
- WO 2018178025 A1
- WO 2018104223 A1
- US 20200140707 A1

### Non-patent literature cited in the description

- **DRIEST, P. J. ; DIJKSTRA, D. J. ; STAMATIALIS, D. ; GRIJPMA, D. W.** Trimerization of Isocyanate-Functionalized Prepolymers: An Effective Method for Synthesizing Well-Defined Polymer Networks. *Macromolecular Rapid Communications,* 2019, vol. 40 (9), 1800867